# EUROPEAN PATENT SPECIFICATION

(11) **EP 0 389 515 B1**
(45) Date of publication and mention of the grant of the patent: **10.04.1996**
(21) Application number: 88909710.1
(22) Date of filing: 17.11.1988
(51) Int. Cl.: H02M 7/217

(54) **INTEGRATABLE SYNCHRONOUS RECTIFIER**
INTEGRIERBARER SYNCHRONGLEICHRICHTER
REDRESSEUR SYNCHRONE INTEGRABLE

(30) Priority: 19.11.1987 AU 5507/87
(43) Date of publication of application: 03.10.1990
(73) Proprietor: MAGELLAN CORPORATION (AUSTRALIA) PTY. LTD., Canning Vale, W.A. 6155 (AU)
(72) Inventor: BROOKS, David, Robert, Perth, W.A. 6000 (AU)
(74) Representative: Livsey, Gilbert Charlesworth Norris
(86) International application number: AU8800444
(87) International publication number: WO8905058

(56) References cited:
- GB-A- 1 127 579
- US-A- 3 909 700
- US-A- 4 533 988
- US-A- 4 656 493
- US-A- 4 700 286
- US-A- 4 716 514
- DERWENT ABSTRACT Accession No. 86/331049/50, Class U13 U24 SU-A-1226596 (Mosc Radio Eltrn) 23 April 1986 (23.04.86)
- DERWENT ABSTRACT Accession No. 88-055916, Class U13 U24 SU-A-132 5644 (Mosc Radio Eltrn) 23 July 1987 (23.07.87)
- DERWENT ABSTRACT Accession No. 88-204481, Class U24 SU-A-136 3406 (Mosc Radiotech Auto) 30 December 1987 (30.12.87)
- PATENT ABSTRACTS OF JAPAN (E-119) page 157 ; & JP-A-57 59 475

## Description

### Field of Invention

The present invention relates to power rectifying apparatus. Specifically, the present invention relates to an integratable rectifier structure utilising various MOS, including NMOS or CMOS implemented transistors. The invention may be of particular value where apparatus is to receive power via electromagnetic or capacitive coupling. Exemplary applications include remote identification devices and "smart" credit cards.

### Prior Art

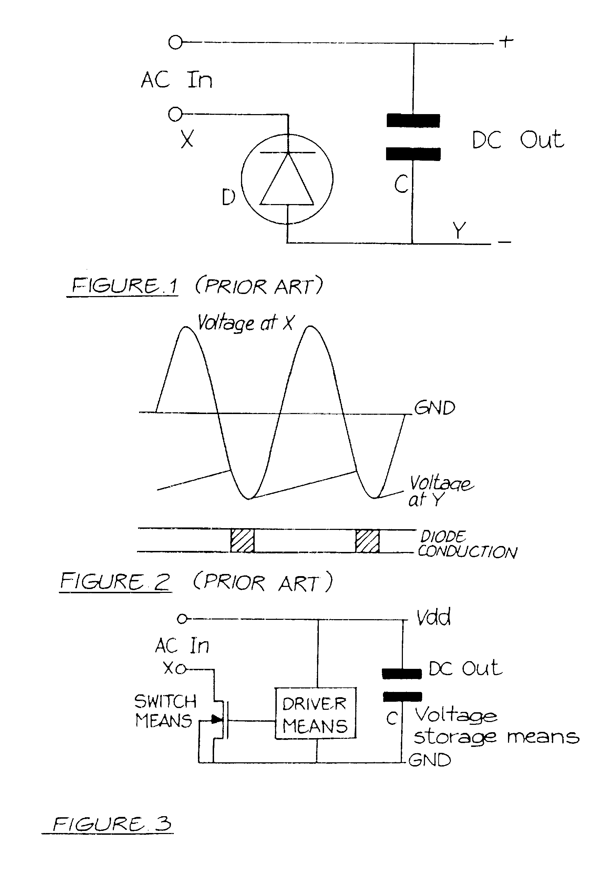

A simple rectifier circuit is shown in Figure 1. It will be noticed that the circuit has been changed from the conventional representation (which would see the rectifying diode placed in the upper branch of the circuit). Figure 1 is in accordance with a copending Australian Patent Application No. PI 5479 (inventor G. Murdoch), which describes this particular arrangement for certain applications.

The operation of the circuit is generally known, and is illustrated diagrammatically in Figure 2. If the upper circuit branch is regarded as GROUND, Figure 2 shows how the applied AC power causes the voltage at Point X to oscillate sinusoidally about Ground. Whenever Point X is more negative than Point Y, the diode conducts (shown by the shaded bands in the lower part of Figure 2), and the capacitor C receives charge. At other times, the diode does not conduct, and the DC load (not shown) is supplied from the charge remaining on C, causing the voltage at Point Y to rise towards zero volts. At the next AC cycle, C is recharged as described above, and Point Y resumes its more negative voltage.

Because only one half (here, the negative half) of the AC wave is actually utilised, this circuit is termed a "half-wave" rectifier.

Prior art rectifying diodes are commonly fabricated as P-N semiconductor junctions, and as such, have been included in bipolar integrated circuit products, permitting such chips to operate directly from an AC power source, rather than requiring conversion to DC power. Examples of such bipolar products include light dimmers and Residual Current Circuit Breakers (RCCB's).

However, such rectifying devices are inherently difficult to fabricate on Very Large-Scale Integration (VLSI) production lines (which are optimised to produce Field-Effect, rather than Bipolar, devices). If the MOS (field-effect) transistors produced by such lines, are connected as diodes (by connecting the Gate and Drain terminals together), the resulting device is very inefficient, and exhibits a large forward voltage-drop, which limits the circuit efficiency. Likewise, the inherent rectification property existing between the "channel" and "substrate" [for explanation of these terms, see any standard text on VLSI design, such as Mead & Conway, "Introduction to VLSI Systems", Addison-Wesley, 1980] of a MOS transistor has been previously exploited as a power rectifier. This suffers from the twin drawbacks of frequently exhibiting poor forward conductivity, and being poorly controlled on a typical MOS fabrication line (it being not a usual mode of operating a MOS transistor). Such techniques have been used in prior art inventions, such as by "Ellsworth & Moll" in WO 88/01448.

Certain prior art inventions also disclose "full-wave" rectifying devices (e.g. "Ellsworth & Moll"). For many low-power applications, this is considered a needless complexity; a half-wave rectifier is usually adequate.

Furthermore, if the diode D were replaced by a switch, and that switch is caused to open and close at the same time as the Diode, the circuit would operate in a similar manner to that aforesaid. This arrangement is known as a "Synchronous Rectifier", since its operation depends on synchronising the operation of such a Switch with the incoming AC wave.

The inherently lower cost and lower power requirements of circuit functions (especially digital logic functions) when implemented in MOS, rather than bipolar, technology provides definite commercial advantages.

We are also aware of the following disclosures. Soviet Union patent specification SU 1226596 (MOSC RADIO ELTRN) describes an injection logic low AC/DC voltage converter having two resistors in a voltage divider, the voltage across a first resistor negatively charging a capacitor. Soviet Union patent specification SU 1325644 (MOSC RADIO ELTRN) describes an integrated circuit AC to DC voltage converter which has a third MOS transistor which is made conducting as a first becomes non-conducting when input voltage reaches cut-off. Japanese patent specification JP 57-59475 (Nippon Denshin Denwa Kosha) describes a field effect transistor rectifying circuit in which the voltage between the source and the drain of a field effect transistor is used as the power voltage and the synchronising drive voltage for the controlling circuit for the field effect transistor used as a rectifier, and the output voltage of the controlling circuit is used as the gate voltage of the field effect transistor.

### Objects of the Invention

An object of the present invention is to provide a rectifier capable of being totally integrated using VLSI techniques.

A further object of the invention is to provide a rectifier which permits the fabrication, on conventional MOS/VLSI facilities, of a device suitable for direct operation from an AC power source, without having the usual external rectifying and voltage regulating circuits provided thereon.

### Summary of Invention

Forms of the invention will be described, compatible with either NMOS or CMOS fabrication methods, however, any form of MOS may be readily adapted for use in the present invention; such adaption being included within the scope of this invention.

Accordingly the present invention provides a synchronous rectifier comprising:
first and second AC signal input terminals, the first AC terminal connected to a first load (C, R load) output terminal (Vdd),
MOS transistor switch means (M1) connected between the second AC input terminal and a second load (C, R load) output terminal (GND), the MOS switch means (M1) being responsive to a control signal for selectively providing conduction of an AC signal applied to the first and second AC signal input terminals; and
MOS transistor driver means (M2, M3) responsive to the applied AC signal and adapted to provide the control signal in synchronism with the applied AC signal,
characterised in that
the driver means is connected across the load output terminals, and comprises a control MOS transistor (M2) having its conductive channel connected in series with a series impedance (M3), and its substrate connected directly to one of the load terminals, and its gate coupled to the second AC terminal; and
the rectifying transistor (M1) has its gate connected to the junction of the control transistor (M2) and its series impedance (M3), and its substrate connected to the second load output terminal.

The present invention also provides a transponder adapted to receive inductive power from an external source in the form of an AC signal, including a rectifier as described above coupled to rectify the AC signal and provide power to a storage capacitor for use by another circuit incorporated in the transponder.

The preferred form of the present invention may be incorporated in a DC voltage supply. The DC voltage supply may provide the rectifying device together with a storage capacitor coupled between the voltage reference and voltage supply rails of the rectifying device. The storage capacitor may take the form of an integrated circuit and capacitor assembly, the subject of a copending application. A zener diode, or other regulator, may additionally be coupled in parallel with the capacitor in order to provide a more stable DC supply.

The preferred form of the present invention may provide a rectifying circuit in which the maximum possible driving voltage is applied to the rectifying transistor so as to turn it "on" (rather than merely connecting it as a diode) thereby achieving a maximum efficiency, and minimising the area required on the chip for this transistor.

The preferred form of the present invention may provide an ISR (integratable synchronous rectifier) suitable for use in any device, including a transponder, adapted to receive, inductively, power from an external source, the received power being in the form of an AC signal, the ISR being coupled to rectify the AC signal and provide a storage capacitor with power, the stored power being made available for the device's circuitry.

Preferred embodiments of the present invention will now be described with reference to the accompanying drawings, wherein :
Figure 1 shows a half-wave rectifier, according to prior art;
Figure 2 illustrates diagrammatically the operation of such a prior art rectifier;
Figure 3 shows an Integratable Synchronous Rectifier (ISR) according to the present invention;
Figure 4 shows a CMOS implementation of a first embodiment of the ISR;
Figure 5 shows a NMOS implementation of a first embodiment of the ISR;
Figure 6 illustrates a PSPICE model performance simulation of an ISR according to Figure 4;
Figure 7 shows a preferred form of a Voltage Comparator means, used in a second preferred embodiment of the present invention; transistor sizes are shown in microns, width:length;
Figure 8 shows a CMOS implementation of a second preferred embodiment of the present invention; and
Figure 9 shows a CMOS implementation of a first form of the ISR, adapted for full-wave rectification.

It should be noted that, although the following description is made with reference to a CMOS N-WELL implementation of the ISR, other MOS implementation are possible. For example, a CMOS P-WELL ISR will provide opposite voltage polarities with respect to an N-WELL ISR.

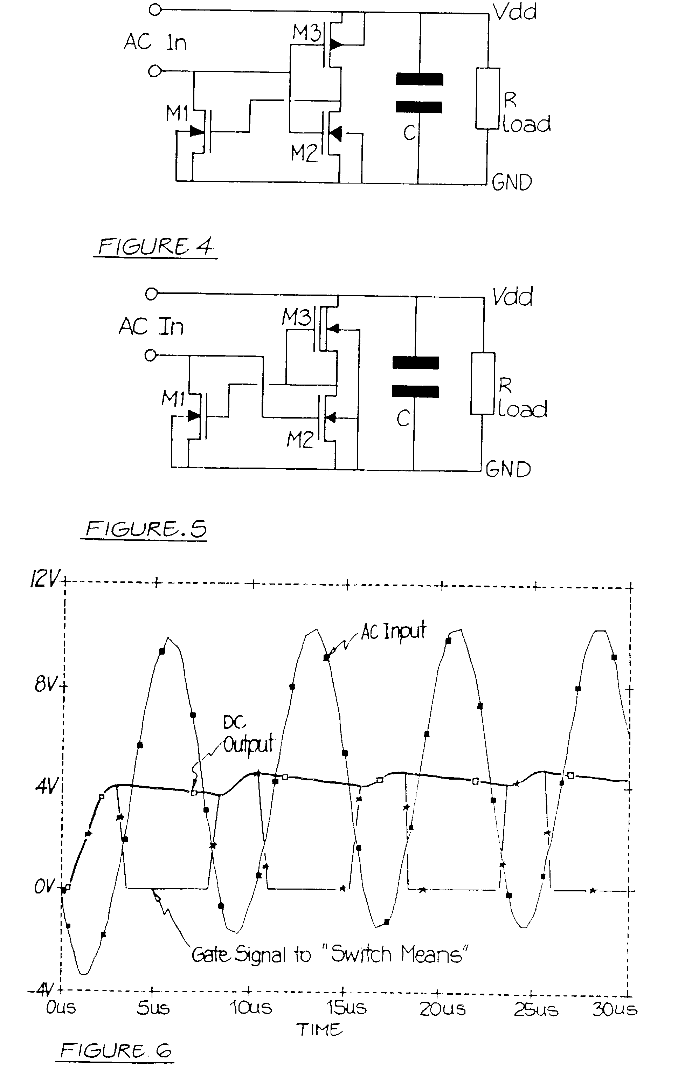

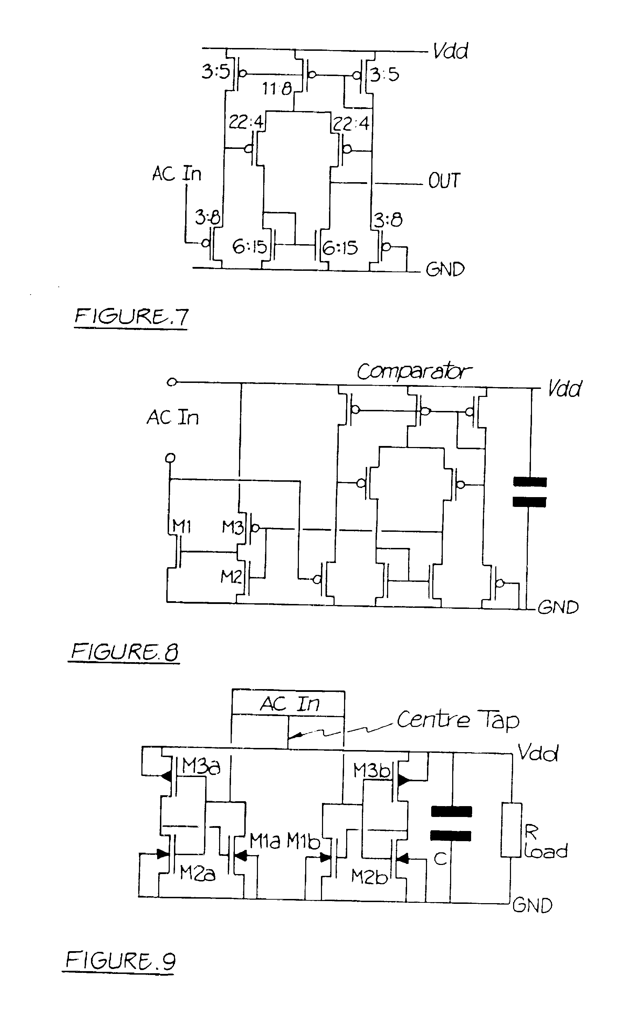

Figure 3 shows a basic implementation of the present invention, which will be discussed in more detail with regard to Figures 4 and 5. The capacitor C does not form a part of the present invention. The rectifying device utilises a MOS (field effect) transistor, so arranged as to function as a Synchronous Rectifier. Since the present invention makes use of no circuit devices except MOS transistors it is inherently well-suited for implementation on VLSI chips. NMOS and CMOS are most suitable, however other known implementations can be contemplated.

To this end, the present invention may be utilised either alone, or in conjunction with a suitable voltage regulating function. Where a voltage regulating function is provided, either of the well-known Series or Shunt regulator arrangements may be used. The Shunt form is of particular merit where an all-integrated power supply circuit is desired, due to its ability to limit the voltage at its input, thereby protecting the VLSI chip from excessive voltages. Series regulators do not offer this feature.

The transistors are used in their normal (gate-controlled conduction) mode.

In the rectifier device shown in Figure 3 wherein the maximum possible driving voltage is applied to the rectifying transistor switch so as to maximize its conductivity (rather than merely connecting it as a diode).

The CMOS ISR of Figure 4 comprises three MOS transistors M1, M2 and M3. M1 and M2 may be N-channel transistors and M3 may be a P-channel transistor. M2 and M3 operate in opposite synchronism, i.e. if M2 is ON, M3 is OFF, and vice versa. M1 is of a sufficient size to enable the device to carry the required power from the AC signal input.

The capacitor C may be an 'off-chip' component. Alternatively, the capacitor may be embodied in the VLSI chip and/or by utilising existing stray chip capacitance. The capacitor may provide a storage means for storing rectified energy and providing a substantially constant DC output voltage while an AC signal is applied to and being rectified by the ISR.

For the purpose of description, assume the capacitor has substantially no energy stored therein and all transistors are off. An AC signal may be applied to the ISR at 'AC-in'. In response to the rising or falling part of each applied AC cycle, the ISR may rectify the applied AC signal in the following manner. Firstly, as the AC voltage rises above Vdd, M2 turns on, M1 and M3 are off. The rising AC voltage may have no effect on the ISR i.e. may not cause the ISR to provide an output. As the applied AC voltage begins to fall, M2 is turned off, M3 turns on. With M3 on, M1 triggers on, thereby providing a conduction path between a terminal at which the AC signal is applied and GND. AC current thereby flows to GND and into the storage capacitor coupled between Vdd and GND until M1 is turned off. As the applied AC voltage begins to once again rise, M2 is turned on and in this way M1 may turn off. The AC voltage during the rising part of the cycle of the applied AC signal provides no ISR output. During the rising part of the AC signal cycle M2 is turned on, but since little voltage is stored in the storage capacitor from the first negative part of the applied Ac signal cycle, Vdd only has a proportionately small voltage potential thereon.

As the applied AC voltage begins to again fall, M2 turns off, M3 on, causing M1 to turn on, thereby causing current to flow through M1 to GND to the voltage storage capacitor. This time, the gate voltage turning on Ml is increased by the voltage increment stored on the supply capacitor of the previous cycle. As the applied AC voltage again rises, M1, M3 are turned off and M2 is turned on. This cycle continues until the applied AC signal is removed, i.e. voltage is supplied via the ISR to the storage capacitor except when the applied AC voltage rises. The storage capacitor may provide a DC supply potential or voltage to other (load) devices coupled between Vdd and GND. A characteristic of the present invention is that the voltage already stored on or in the capacitor C, itself serves to enhance the conductivity of M1, by boosting the applied gate voltage.

Figure 5 shows the present invention, as adapted for a NMOS fabrication process. This process cannot provide P-channel transistors, so M3 becomes a NMOS Depletion device and rather than receiving its switching trigger directly from the applied AC signal, it is on continuously thereby providing (in effect) a resistive load for M2.

From the above description, it can be seen that M2, M3 function to form a driver, buffer or inverter stage for M1. M1 provides the AC signal rectification, by selectively applying the AC signal, or part(s) thereof, through M1 and GND to a voltage storage device. M2, M3 merely function to trigger M1, that is, to provide the AC signal selection.

Unlike common CMOS design practice, M2, M3 may be of unequal sizes. Unequal sized buffer transistors may provide a low threshold voltage. M2 may be larger than M3. The size of each transistor depends on the fabrication technology chosen. M2 may be as large as possible and M3 may be as small as possible. A size guide for M2, M3 is that the larger M2 and the smaller M3, the more efficiently but also more slowly the ISR operates and also the transistors occupy valuable chip real estate (area).

M1 must be chosen to be of sufficient size to enable the selected AC power to pass through without damaging itself, or causing an unacceptable forward voltage drop. While M1, M3 are off and M2 is on, the applied AC signal may rise to any voltage level, the limit being the point at which the ISR is destroyed by over-voltage.

In order to minimise the possibility of a latch-up occurring in the buffer of the ISR, the rectifier transistor M1 should be well segregated from the boundaries of "well" structures in the silicon of the chips, i.e. M1 may conveniently not be fabricated in a "well". This is because the voltage at the AC-in point necessarily swings outside the span of the Gnd and Vdd rails during operation and carries with it the appropriate terminal of M1. Should conduction from the substrate into the M1 terminal occur as AC-in swings negative, such conduction will only aid the operation of M1. Nevertheless, M1 will conveniently be made of sufficient size that the requisite current may be passed without forward-biasing the diffusion/substrate diode (this typically occurs at an AC-in voltage of about -0.7V).

M2 may advantageously also not be fabricated in a "well". The connection to the gate of the P-channel device M3 may not cause latch-up problems if it is fabricated in polysilicon or metal.

Following usual MOS design practice, the substrate connections of M1 and M2 should be returned to the Gnd point. The substrate of M3 will be returned to Vdd in the CMOS implementation (Figure 4), and to Gnd in the NMOS implementation (Figure 5).

With regard to a preferred embodiment of the present invention, in its CMOS implementation, as shown in Figure 4, the following details a PSPICE circuit file. (PSPICE, an industry-standard MOS circuit-simulation computer program, is published by MicroSim Corporation, Irvine, California). The corresponding circuit schematic is given in Figure 4.

Simulation results, for a low-power application, are also presented (in Figure 6). The PSPICE output plot shows the circuit's start-up behaviour, the output voltage, and the drive signal to the transistor M1. The PSPICE file is as follows :

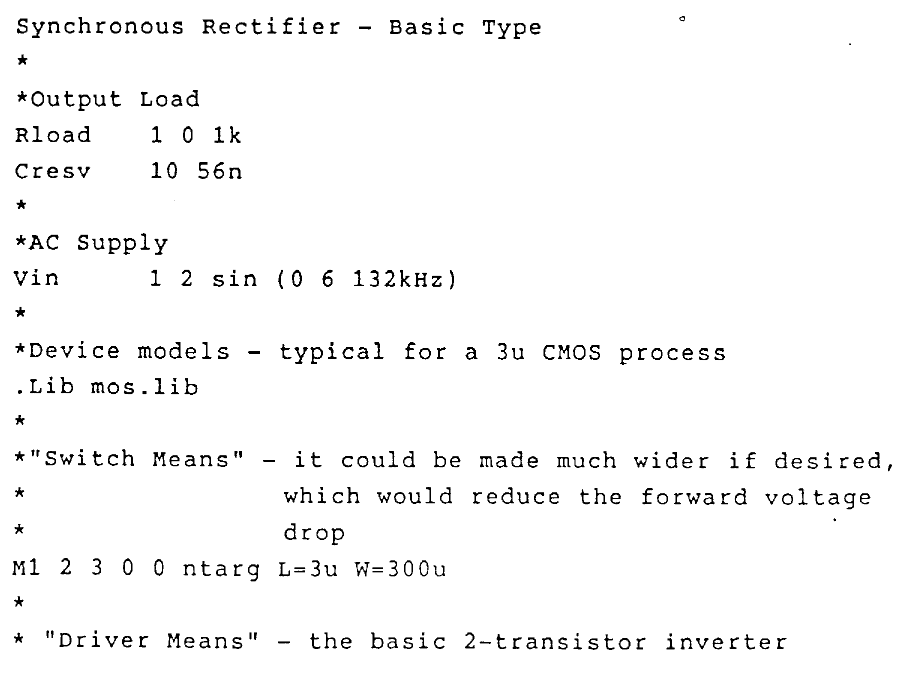

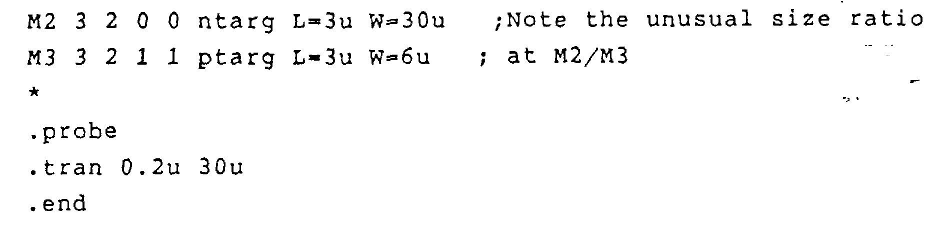

Either the CMOS or NMOS versions of the present invention as hereinbefore described may be given an improved performance (greater electrical efficiency) by adapting the circuit to provide more exact switching of the "switch means" (i.e. M1). Practically, this means separating the input of the buffer M2/M3 from the AC-in point, and interposing some form of sensing circuit (the aforesaid "voltage comparator means" as shown in Figure 7), adapted to provide a substantially sharp driving signal as the AC-in voltage passes above or below that of the Gnd rail. This has two beneficial effects : (a) The transistor M1 is turned on and off much more rapidly, thereby reducing electrical losses therein while it is switching (and may therefore have relatively high electrical resistance), and (b) The voltage (at AC-in) at which switching occurs may be brought closer to that of the Gnd rail, so further reducing losses. The basic circuit exhibits some conduction while AC-in is positive with respect to Gnd, which represents a loss of energy from the storage means.

Where such a Voltage Comparator is used, the buffer (M2/M3) will preferably be constructed or sized according to conventional techniques rather than using the very wide M2 transistor described above. This is because the voltage sensing function is now performed by the Voltage Comparator Means, while the Buffer is solely required to drive the M1 transistor as efficiently as possible.

With respect to Figure 4, a suitable Voltage Comparator Means is shown in Figure 7. The AC-in, Vdd and Gnd rails correspond to those of Figure 4, while the Out line connects to the gates of M2/M3 in that Figure. A complete rectifier according to this second preferred embodiment, is shown in Figure 8.

Figure 9 shows the basic rectifier of Figure 4, expanded to provide full-wave rectification, in the well-known "bi-phase" configuration. Any of the other forms or implementations of the present invention may similarly be utilised, as would be understood from the foregoing by those skilled in the art. Likewise, it will be understood by those skilled in the art, that the present invention may be realised with appropriate modification in the opposite polarity to that shown and described in the foregoing embodiment.

## Claims

1. A synchronous rectifier comprising:
first and second AC signal input terminals, the first AC terminal connected to a first load (C, R load) output terminal (Vdd),
MOS transistor switch means (M1) connected between the second AC input terminal and a second load (C, R load) output terminal (GND), the MOS switch means (M1) being responsive to a control signal for selectively providing conduction of an AC signal applied to the first and second AC signal input terminals; and
MOS transistor driver means (M2, M3) responsive to the applied AC signal and adapted to provide the control signal in synchronism with the applied AC signal,
characterised in that
the driver means is connected across the load output terminals, and comprises a control MOS transistor (M2) having its conductive channel connected in series with a series impedance (M3), and its substrate connected directly to one of the load terminals, and its gate coupled to the second AC terminal; and
the rectifying transistor (M1) has its gate connected to the junction of the control transistor (M2) and its series impedance (M3), and its substrate connected to the second load output terminal.

2. A synchronous rectifier as claimed in claim 1, being integratable into the same VLSI chip as the load to be served by said rectifier.

3. A synchronous rectifier as claimed in either previous claim, wherein the rectifying transistor (M1) and the control transistor (M2) are both operated in a gate-controlled conduction mode and the series impedance of the control transistor comprises a further MOS transistor (M3, Figure 4) of opposite polarity to the control transistor and having its substrate connected to the opposite polarity to the control transistor and having its substrate connected to the opposite side of the load to the substrate of the control transistor.

4. A synchronous rectifier as claimed in either of claims 1 and 2, wherein the rectifying transistor (M1) and the control transistor (M2) are both operated in a gate-controlled conduction mode and the series impedance of the control transistor comprises a further MOS transistor (M3, Figure 5) of the same polarity as the control transistor but of depletion type and having its substrate connected to the same side of the load as the substrate of the control transistor.

5. A synchronous rectifier as claimed in claims 1, 2, 3 or 4, wherein the control signal is an enhanced gate-drive signal.

6. A synchronous rectifier as claimed in claims 1, 2, 3 or 4, wherein the control signal is provided by voltage comparator means adapted to sense the passing of the AC signal above and below a reference voltage.

7. A synchronous rectifier as claimed in claims 1, 2, 3 or 4, wherein the control signal is level-sensitive.

8. A synchronous rectifier as claimed in claims 1, 2, 3 or 4, wherein the driver means comprises a first and a second alternately arranged transistor coupled in series across the load output terminals, the first transistor being larger than the second transistor.

9. A synchronous rectifier as claimed in claim 8, wherein the driver means comprises an NMOS inverter, and the first transistor is at least four times as large as the second transistor.

10. A synchronous rectifier as claimed in any previous claim, characterized in that all components are formed as semiconductor elements in a common semiconductor chip.

11. A transponder adapted to receive inductive power from an external source in the form of an AC signal, including a rectifier according to any previous claim coupled to rectify the AC signal and provide power to a storage capacitor for use by another circuit incorporated in the transponder.

## Patentansprüche

1. Synchrongleichrichter mit:
einem ersten und einem zweiten Wechselstromsignal-Eingangsanschluß, wobei der erste Wechselstrom-Anschluß mit einem ersten Ausgangsanschluß (Vdd) für eine Last (C, R_{Last}) verbunden ist,
einer MOS-Transistor-Schalteinrichtung (M1), die zwischen den zweiten Wechselstrom-Eingangsanschluß und einen zweiten Ausgangsanschluß (GND) für eine Last (C, R_{Last}) geschaltet ist, wobei die MOS-Schalteinrichtung (M1) derart auf ein Steuersignal reagiert, daß sie selektiv das Weiterleiten eines dem ersten und dem zweiten Wechselstromsignal-Eingangsanschluß zugeführten Wechselstromsignals veranlaßt, und
einer MOS-Transistor-Treibereinrichtung (M2,M3), die auf das zugeführte Wechselstromsignal reagiert und in der Lage ist, das Steuersignal synchron mit dem zugeführten Wechselstromsignal zu erzeugen,
dadurch gekennzeichnet, daß
die Treibereinrichtung zwischen die Last-Ausgangsanschlüsse geschaltet ist und einen Steuer-MOS-Transistor (M2) aufweist, dessen leitender Kanal in Reihe mit einer Reihenimpedanz (M3) geschaltet ist, dessen Substrat direkt mit einem der Last-Anschlüsse verbunden ist und dessen Gate mit dem zweiten Wechselstrom-Anschluß gekoppelt ist, und
der Gleichrichtungstransistor (M1) an seinem Gate mit dem Verbindungspunkt zwischen dem Steuer-Transistor (M2) und dessen Reihenimpedanz (M3) verbunden ist, und an seinem Substrat mit dem zweiten Last-Ausgangsanschluß verbunden ist.

2. Synchrongleichrichter nach Anspruch 1, der in den gleichen VLSI-Chip wie die von dem Gleichrichter zu bedienende Last integrierbar ist.

3. Synchrongleichrichter nach einem der vorherigen Ansprüche, bei dem der Gleichrichtungstransistor (M1) und der Steuer-Transistor (M2) beide in einem gattergesteuerten Leitendmodus betrieben werden und die Reihenimpedanz des Steuer-Transistors einen weiteren MOS-Transistor (M3, Fig. 4) aufweist, dessen Polarität derjenigen des Steuer-Transistors entgegengesetzt ist, dessen Substrat mit der dem Steuer-Transistor entgegengesetzten Polarität verbunden ist und dessen Substrat mit der dem Substrat des Steuer-Transistors entgegengesetzten Seite der Last verbunden ist.

4. Synchrongleichrichter nach Anspruch 1 und 2, bei dem der Gleichrichtungstransistor (M1) und der Steuer-Transistor (M2) beide in einem gattergesteuerten Leitendmodus betrieben werden und die Reihenimpedanz des Steuer-Transistors einen weiteren MOS-Transistor (M3, Fig. 5) aufweist, dessen Polarität gleich derjenigen des Steuer-Transistors ist, der jedoch vom Verarmungs-Typ ist, und dessen Substrat mit der gleichen Seite der Last verbunden ist wie das Substrat des Steuer-Transistors.

5. Synchrongleichrichter nach Anspruch 1, 2, 3 oder 4, bei dem das Steuer-Signal ein Signal für Anreicherungs-Gattersteuerung ist.

6. Synchrongleichrichter nach Anspruch 1, 2, 3 oder 4, bei dem das Steuer-Signal von einer Spannungskomparatoreinrichtung geliefert wird, die ein Über- und Unterschreiten der Referenzspannung durch das Wechselstromsignal detektieren kann.

7. Synchrongleichrichter nach Anspruch 1, 2, 3 oder 4, bei dem das Steuer-Signal niveauempfindlich ist.

8. Synchrongleichrichter nach Anspruch 1, 2, 3 oder 4, bei dem das Treibereinrichtung einen ersten und einen zweiten alternierend angeordneten Transistor aufweist, der in Reihe zwischen die Last-Ausgangsanschlüsse geschaltet ist, wobei der erste Transistor größer ist als der zweite Transistor.

9. Synchrongleichrichter nach Anspruch 8, bei dem das Treibereinrichtung einen NMOS-Inverter aufweist und der erste Transistor mindestens viermal so groß ist wie der zweite Transistor.

10. Synchrongleichrichter nach einem der vorherigen Ansprüche, dadurch gekennzeichnet, daß sämtliche Komponenten als Halbleiterelemente in einem gemeinsamen Halbleiterchip ausgebildet sind.

11. Sendeempfänger, der in der Lage ist, von einer externen Quelle induktive Leistung in Form eines Wechselstromsignals zu empfangen, mit einem Gleichrichter gemäß einem der vorhergehenden Ansprüche, der derart geschaltet ist, daß er das Wechselstromsignal gleichrichtet und einem Speicherkondensator Strom zur Verwendung durch eine weitere, in dem Sendeempfänger enthaltene Schaltung zuführt.

## Revendications

1. Un redresseur synchrone comprenant,
une première et une seconde bornes d'entrée de signal alternatif (AC), la première borne AC connectée à une première borne de sortie (Vdd) de première charge (C, R charge),
un moyen de commutation à transistor MOS (M1) connecté entre la seconde borne d'entrée AC et la seconde borne de sortie (GND) de charge (C, R charge), le moyen de commutation MOS (M1) étant sensible à un signal de commande pour le déclenchement sélectif de conduction d'un signal AC appliqué aux première et seconde bornes d'entrée et de signal AC ; et,
un moyen de pilotage de transistor MOS (M2, M3) sensible au signal AC appliqué et adapté à produire, le signal de commande en synchronisme avec le signal AC appliqué,
caractérisé en ce que,
le moyen de pilotage est connecté aux bornes de sortie de charge et comprend un transistor MOS de commande (M2) ayant son canal de conduction monté en série avec une impédance série (M3), et son substrat connecté directement à l'une des bornes de charge, et sa grille couplée à la seconde borne AC ; et,
le transistor redresseur (M1) a sa grille connectée à la jonction du transistor de commande (M2) et son impédance série (M3) et son substrat connectés à la seconde borne de sortie de charge.

2. Un redresseur synchrone selon la revendication 1 adapté à être incorporé dans une même plaquette VLSI que la charge à desservir par le dit redresseur.

3. Un redresseur synchrone selon la revendication 1 ou 2 où le transistor redresseur (M1) et le transistor de commande (M2) sont tous deux actionnés en un mode de conduction à commande par grille et l'impédance série du transistor de commande comprend un autre transistor MOS (M3, figure 4) de polarité opposée au transistor de commande et ayant son substrat connecté à la polarité opposée au transistor de commande et ayant son substrat connecté au côté opposé de la charge au substrat du transistor de commande.

4. Un redresseur synchrone selon la revendication 1 ou 2, où le transistor redresseur (M1) et le transistor de commande (M2) sont tous deux actionnés dans un mode de conduction à commande par grille et l'impédance série du transistor de commande comprend un autre transistor MOS (M3, figure 5) de la même polarité que le transistor de commande, mais du type à dépletion et ayant son substrat connecté au même côté de la charge que le substrat du transistor de commande.

5. Un redresseur synchrone selon les revendications 1, 2, 3 ou 4, où le signal de commande est un signal de commande de grille renforcé.

6. Un redresseur synchrone selon les revendications 1, 2, 3 ou 4, où le signal de commande est fourni par un moyen de comparaison de tension adapté à détecter le franchissement par le signal alternatif dans un sens ou dans l'autre d'une tension de référence.

7. Un redresseur synchrone selon les revendications 1, 2, 3 ou 4, où le signal de commande est sensible au niveau.

8. Un redresseur synchrone selon les revendications 1, 2, 3 ou 4, où le moyen de pilotage comprend un premier et un second transistors agencés en alternance montés en série entre les bornes de sortie de charge, le premier transistor étant plus grand que le second transistor.

9. Selon la revendication 8 où le moyen de pilotage comprend un inverseur MNOS et le premier transistor est au moins quatre fois aussi grand que le second transistor.

10. Selon une quelconque des revendications précédentes, caractérisée en ce que tous les composants sont formés en éléments semi-conducteurs dans une microplaquette semi-conductrice commune.

11. Un transpondeur adapté à recevoir de la puissance inductive d'une source externe sous la forme d'un signal alternatif (AC), incluant un redresseur selon une quelconque des revendications précédentes, couplé pour le redressement du signal AC et fournir de la puissance à un condensateur de stockage pour l'utilisation pour un autre circuit incorporé dans le transpondeur.
